# EUROPEAN PATENT APPLICATION

(11) **EP 4 424 790 A1**
(43) Date of publication of application: **04.09.2024**
(21) Application number: 23305261.2
(22) Date of filing: 28.02.2023
(51) Int. Cl.: C09J 123/08, C08L 23/08

(54) **HOT MELT ADHESIVE COMPOSITION COMPRISING AN ETHYLENE VINYL ACETATE COPOLYMER**

(71) Applicant: Bostik SA, 92700 Colombes (FR)
(72) Inventor: WU, Xiaoling, SHANGHAI, 201108 (CN); ZENG, Fanzhong, SHANGHAI, 201108 (CN)
(74) Representative: Arkema Patent

(57) **Abstract**

The present invention relates to a hot melt adhesive composition comprising:
- i) an ethylene vinyl acetate copolymer comprising a vinyl acetate content higher or equal to 20 % by weight;
- ii) an ethylene-based terpolymer comprising units derived from:
∘ ethylene;
∘ alkyl (meth)acrylate; and
∘ α,β-unsaturated carboxylic acid or anhydride thereof;

- iii) a tackifying resin, and
- iv) a wax.

## Description

### TECHNICAL FIELD

The present invention relates to a hot melt adhesive composition comprising an ethylene vinyl acetate copolymer.

The present invention also relates to the uses of said hot melt adhesive composition.

### TECHNICAL BACKGROUND

Hot melt adhesives are widely used in various applications, such as packaging, bookbinding and woodworking, as they have good stability and do not require the use of solvents. Such adhesives can also be used in nonwoven applications. For example, disposable nonwoven absorbent articles are widely used for infant, young child, incontinent adult and feminine care applications.

Hot melt adhesives are substances which are solid at room temperature and which often comprise neither water nor solvent. They are applied in the molten state after heating to a temperature generally of between 150 and 250°C, most often between 150°C and 180°C, and solidify during cooling, thus forming a seal (or adhesive joint) which ensures the attachment of the two substrates to be assembled.

Hot melt adhesive allowing application at low temperature (for example lower or equal to 150°C) have been developed recently. However, these hot melt adhesives do not allow to combined good adhesive properties at both ends of the temperature spectra, namely at both low and high temperatures. But, hot melt adhesives used for packaging such as for example sealing of cases in particular in carton, are submitted during transportation and storing to various temperatures according to climatic conditions, geographical zones, etc.. Besides, hot melt adhesives in order to be useful in packaging field must be capable to ensure good bonding on substrates such as paper, carton, corrugated, coated, metallized, varnished...

There is still a need for new hot melt adhesive compositions which allows remediating at least part of the mentioned drawbacks.

More particularly, there is a need for hot melt adhesive compositions exhibiting good adhesive properties for bonding substrates at both low and high temperatures.

There is a need for hot melt adhesive composition exhibiting good adhesive properties for bonding substrates (and in particular good fiber tear) in a wide range of temperature (for example from -15°C to 60°C).

### DESCRIPTION OF THE INVENTION

### A. Hot melt adhesive composition

The present invention relates to a hot melt adhesive composition comprising:
- i) an ethylene vinyl acetate copolymer comprising a vinyl acetate content higher or equal to 20 % by weight;
- ii) an ethylene-based terpolymer comprising units derived from:
   ∘ ethylene;
   ∘ alkyl (meth)acrylate; and
   ∘ α,β-unsaturated carboxylic acid or anhydride thereof;
- iii) a tackifying resin, and
- iv) a wax.

As used herein, the term "copolymer" refers to polymer formed by the polymerization of at least two different monomers. It includes terpolymers (more than two different monomers units).

### Ethylene vinyl acetate copolymer i)

The ethylene vinyl acetate (EVA) copolymer i) has preferably a melt index greater than about 100 g/10 minutes, more preferably greater than 150 g/10 minutes, and even more preferably greater than 500 g/10 minutes.

Melt index of the ethylene vinyl acetate copolymer i) is determined according to ASTM D1238 using a 2,16 kg weight load and a test temperature of 190°C.

As used herein, the terms "melt index" or "melt flow rate (MFR)" are used interchangeably.

The ethylene vinyl acetate copolymer i) preferably comprises a vinyl acetate content of at least 22% by weight, more preferably at least 25% by weight (based on the total weight of said ethylene vinyl acetate copolymer i).

The vinyl acetate content is typically the weight percentage of units derived from vinyl acetate in the ethylene vinyl acetate copolymer i).

The ethylene vinyl acetate copolymer i) may optionally be modified by methods known in the art (for example grafting, copolymerizing). The ethylene vinyl acetate copolymer i) may include ethylene vinyl acetate copolymer modified with unsaturated carboxylic acid or its derivatives. For example, it includes maleic anhydride modified ethylene vinyl acetate.

Suitable ethylene vinyl acetate copolymers i) are commercially available under the ATEVA series of trade designations supplied by Celanese, under the LEVAMELTS series of trade designations supplied by Arlanxeo, and ESCORENE^{™} Ultra commercialized by Exxon Chemical Co.

The hot melt adhesive composition may comprise one or a mixture of several ethylene vinyl acetate copolymers i). Mixtures of copolymers i) may be used as long as the resultant mixture falls within the described ranges of vinyl acetate content (and preferably of melt index also). It is therefore possible to mix at least two ethylene vinyl acetate copolymers having different vinyl acetate contents.

The hot melt adhesive composition may comprise from 5% to 80% by weight of ethylene vinyl acetate copolymer(s) i), preferably from 10% to 60% by weight, and even more preferably from 15% to 50% by weight based on the total weight of the hot melt adhesive composition. Even more preferably, the hot melt adhesive composition comprises from 25% by weight to 40% by weight of ethylene vinyl acetate copolymer(s) i) based on the total weight of the hot melt adhesive composition.

### Ethylene-based terpolymer ii)

The hot melt adhesive composition according to the invention comprises an ethylene-based terpolymer comprising units derived from:
∘ ethylene;
∘ alkyl (meth)acrylate; and
∘ α,β-unsaturated carboxylic acid or anhydride thereof.

The terpolymer ii) typically comprises at least one unit derived from ethylene, at least one unit derived from alkyl (meth)acrylate, and at least one unit derived from α,β-unsaturated carboxylic acid or anhydride thereof.

The alkyl (meth)acrylate includes alkyl acrylates and alkyl methacrylates. The alkyl group of the alkyl (meth)acrylate may contain from 1 to 12 carbon atoms.

Examples of alkyl (meth)acrylate include methyl (meth)acrylate, ethyl (meth)acrylate, n-butyl (meth)acrylate, isobutyl (meth)acrylate, isopropyl (meth)acrylate, and mixtures thereof.

α,β-unsaturated carboxylic acids and anhydrides thereof are preferably selected from the group consisting of : maleic acid, itaconic acid, citraconic acid, fumaric acid, maleic anhydride, itaconic anhydride, fumaric anhydride, citraconic anhydride.

More preferably, α,β-unsaturated carboxylic acid and anhydride thereof is maleic anhydride.

The ethylene-based terpolymer ii) may comprise an alkyl (meth)acrylate content ranging from 15 to 35 % by weight, preferably from 18 to 30 % by weight based on the total weight of the ethylene-based terpolymer ii).

The ethylene-based terpolymer ii) may comprise from 50% to 99% by weight of ethylene, preferably from 55% to 95% by weight of ethylene, even more preferably from 60% to 85% by weight of ethylene, based on the total weight of the ethylene based terpolymer ii).

The ethylene-based terpolymer ii) may comprises a content of α,β-unsaturated carboxylic acids or anhydrides thereof ranging from 0.1% to 8 % by weight, more preferably from 0.5 to 5% by weight, based on the total weight of the ethylene-based terpolymer ii).

The terpolymer ii) may have a melting point from 30°C to 120°C, preferably from 40°C to 95°C, and even more preferably from 50°C to 80°C. The melting point can be measured according to ISO11357-3.

The terpolymer ii) has preferably a melt index lower than or equal to 100 g/10 minutes, more preferably in the range of from 5 g/10 minutes to 75 g/10 minutes, and even more preferably in the range of from 5 g/10 minutes to 70 g/10 minutes. Even more preferably, the terpolymer ii) has a melt index ranging from 5 g/10 minutes to 30 g/10 minutes.

Melt Index of the terpolymer ii) is determined according to ISO 1872-2 using a 2,16 kg weight load and a test temperature of 190°C.

The ethylene-based terpolymer ii) may have a hardness shore D lower or equal to 50, preferably lower or equal to 40, even more preferably lower or equal to 34.

The hardness shore D may be measured according to ISO868.

Examples of terpolymer ii) useful in the present invention may be available from Japan Polyethylene Corporation, such as for example ET350X (maleic anhydride-ethylene-methyl acrylate having a melt index of about 12 g/ 10min, and a methyl acrylate content of about 23 wt%), ET530H (maleic anhydride- ethylene-methyl acrylate having a melt index of about 30 g/10 minutes, and a methyl acrylate content of about 16 wt%), or from SK Functional Polymer under trade name LOTADER^{®}.

The terpolymer ii) may also be obtained by copolymerization of ethylene, α,β-unsaturated carboxylic acid or anhydride thereof, and alkyl (meth)acrylate, more preferably by radical copolymerization.

The ethylene-based terpolymer ii) is preferably selected from the group consisting of maleic anhydride-ethylene-methylacrylate terpolymer, maleic anhydride-ethylene-ethylacrylate terpolymer, maleic anhydride-ethylene-nbutylacrylate terpolymer, maleic anhydride-ethylene-isopropylacrylate terpolymer, maleic anhydride-ethylene-isobutylacrylate terpolymer, maleic anhydride-ethylene-isobutylmethacrylate terpolymer, and mixtures thereof.

More preferably, the ethylene-based terpolymer ii) is maleic anhydride-ethylene-methylacrylate terpolymer.

The hot melt adhesive composition may comprise one or a mixture of different terpolymers ii).

The hot melt adhesive composition may comprise from 1% to 50% by weight of terpolymer(s) ii), preferably from 2% to 30% by weight, and even more preferably from 2% to 20% by weight based on the total weight of the hot melt adhesive composition. Even more preferably, the hot melt adhesive composition comprises from 5% by weight to 15% by weight of terpolymer(s) ii) based on the total weight of the hot melt adhesive composition.

### Tackifying resin iii)

The hot melt adhesive composition preferably comprises a tackifying resin iii).

The tackifying resin iii) can be present in the hot melt adhesive composition at a content ranging from 20 to 70 % by weight, and preferably from 25 to 60 % by weight, and even more preferably from 30 % to 50% by weight relative to the total weight of the hot melt adhesive composition.

The tackifying resins iii) or tackifiers which are used in the hot melt adhesives of the present invention are those which are compatible with the copolymers i) /terpolymers ii).

As used herein, the terms *"tackifying resin"* or *"tackifier"* are used interchangeably. The tackifying resin iii) may be selected from the group consisting of:
(a') Aliphatic and cycloaliphatic petroleum hydrocarbon resins and the hydrogenated derivatives thereof;
(b') Aromatic petroleum hydrocarbon resins and the hydrogenated derivatives thereof;
(c') Aromatic modified aliphatic or cycloaliphatic petroleum hydrocarbon resins and the hydrogenated derivatives thereof;
(d') Polyterpene resins and its hydrogenated derivatives;
(e') Copolymers and terpolymers of natural terpenes, e.g. styrene/terpene, α-methyl styrene/terpene and vinyl toluene/terpene;
(f') Natural and modified rosin such as, for example, gun rosin, wood rosin, tall-oil rosin, distilled rosin, hydrogenated rosin, dimerized rosin and polymerized rosin;
(g') Glycerol and pentaerythritol esters of natural and modified rosin, such as, for example, the glycerol ester of pale wood rosin, the glycerol ester of hydrogenated rosin, the glycerol ester of polymerized rosin, the pentaerythritol ester of pale wood rosin, the pentaerythritol ester of hydrogenated rosin, the pentaerythritol ester of tall-oil rosin, and the phenolic modified pentaerythritol ester of rosin;
(h') Phenolic-modified terpene resins such as for example, the resin product resulting from the condensation in an acidic medium of a terpene and a phenol; and
(i') mixtures thereof.

The tackifying resin may have a Ring and Ball softening point (measured by ASTM E28) of at least 90°C and preferably from 100°C to 130°C.

The aliphatic petroleum hydrocarbon resins result typically from the polymerization of monomers consisting primarily of aliphatic olefins and di-olefins. The aliphatic petroleum hydrocarbon resins, and the hydrogenated derivatives thereof, may be based on C5 olefins such as for example cis/trans 1,3-pentadienes, 2-methyl-2-butene.

Examples of aliphatic petroleum hydrocarbon resins (and hydrogenated derivatives) are those commercially available under the tradenames Eastotac^{®} H100W (resin C5 fully hydrogenated) from Eastman Chemical Company, or Eastotac^{®} H100W (resin C5 fully hydrogenated).

The cycloaliphatic petroleum hydrocarbon resins result typically from the polymerization of monomers consisting primarily of cycloaliphatic unsaturated hydrocabons. It may be based on dicyclopentadiene or its derivatives (methyldicyclopentadiene, dimethyldicyclopentadiene, ...).

Aromatic modified aliphatic or cycloaliphatic petroleum hydrocarbon resins may be obtained from copolymerization of aliphatic olefins (such as for example C5) or cycloaliphatic, with aromatic olefins (such as for example C9) (optionally followed by partial or total hydrogenation).

As examples of commercially available tackifier resins mention may be made of: unmodified natural tall oil rosins from Arizona Chemical Company sold under the trade names Sylvaros^{®} (85, 90 and NCY), the partially hydrogenated rosin from Eastman sold under the trade name Foralyn^{®} E; the fully hydrogenated rosin from Eastman sold under the trade name Foral^{®} AX-E; Sylvalite^{®} RE 100L, a pentaerythritol based tall-oil rosin ester, polyterpene tackifiers from Arizona Chemical company sold under the trade names Sylvagum^{®} TR and Sylvares^{®} TR series (7115, 7125, A25L, B115, M1115); the polyterpene from DRT sold under the trade name DERCOLYTE^{®}M105.

Preferably, the tackifying resin iii) is selected from the hydrogenated resins. The hydrogenated resins include partial or total hydrogenated resins.

Preferably, the tackifying resin iii) is selected from the group consisting of:
(a') Aliphatic and cycloaliphatic petroleum hydrocarbon resins and the hydrogenated derivatives thereof;
(b') Aromatic petroleum hydrocarbon resins and the hydrogenated derivatives thereof;
(c') Aromatic modified aliphatic or cycloaliphatic petroleum hydrocarbon resins and the hydrogenated derivatives thereof; and
(i') mixtures thereof.

Even more preferably, the tackifying resin iii) is selected from aromatic petroleum hydrocarbon resins and the hydrogenated derivatives thereof.

### Wax iv)

The hot melt adhesive composition according to the present invention preferably further comprises a wax iv).

The wax iv) may be present in the hot melt adhesive composition at a content from 1% to 50 % and preferably from 5% to 40% by weight, and even more preferably from 10% to 30 % by weight relative to the total weight of the hot melt adhesive composition.

Waxes suitable for use in the present invention typically include microcrystalline waxes, paraffin waxes, polyethylene waxes, polypropylene waxes, by-product polyethylene waxes, and Fischer-Tropsch waxes.

Preferably, the wax iv) is a Fischer-Tropsch wax.

Examples of Fischer-Tropsch waxes are available from Sasol-SA under commercial name PARAFLINT^{®} H-1, H-4 and H-8, and from Shell under commercial name GTL Sarawax.

### Additives

The hot melt adhesive composition may comprise one or more additives.

The additives may be selected from the group consisting of plasticizer, stabilizer, inert colorant, filler, surfactant, other types of polymers, crosslinking agent, nucleating agent, reactive compound, fire-retardant mineral or organic agent, ultraviolet (UV) or infrared (IR) light absorbing agent, UV or IR fluorescing agents, and mixtures thereof.

Typical fillers include talc, calcium carbonate, clay, silica, mica, wollastonite, feldspar, aluminum silicate, alumina, hydrated alumina, glass microspheres, ceramic microspheres, thermoplastic microspheres, baryte and wood flour.

A suitable plasticizer may be selected from naphthenic oil, a paraffinic oil, polyisobutylene, a benzoate ester, and mixtures thereof.

Naphthenic oils and paraffinic oils are petroleum based oils which consists in a mixture of naphthenic hydrocarbons (aliphatic, saturated or unsaturated, C4 to C7-member hydrocarbon 30 rings, and preferably aliphatic, saturated or unsaturated, C4 to C6-member rings. As way of example, mention may be made of cycloalkanes such as cyclopentane, cyclohexane, cycloheptane)), paraffinic hydrocarbons (saturated, linear or branched, alkanes) and aromatic hydrocarbons (aromatic hydrocarbon rings, which may be monocyclic or polycyclic, and preferably aromatic C6-member hydrocarbon rings).

The classification of Naphthenic and Paraffinic oil is made based on the amount of each type of hydrocarbons in the oil. Typically, paraffinic oils have a paraffinic hydrocarbons content of at least 50% by weight; naphthenic oils have a naphthenic hydrocarbons content between 30% and 40% by weight, relative to the total weight of the plasticizer.

Useful plasticizers are commercially available. By way of example, mention may be made of the naphtenic oils from NYNAS sold under the trade names NYFLEX^{®} 223 and NYFLEX^{®} 222B.

Other plasticizer(s) may be added in the hot melt adhesive composition according to the invention such as for example:
- a polyisobutylene, such as INDOPOL H300, a liquid polybutene available from INEOS oligomers with a molecular weight (Mn) of 1300 ;
- solid plasticizers such as a benzoate ester, such as 1,4-cyclohexane dimethanol dibenzoate (Softening point of 118 °C) available from EASTMAN CHEMICAL under the name BENZOFLEX 352.

The composition according to the present invention may include at least one stabilizer. The stabilizer may be present in the hot melt adhesive composition at a content from 0.01 to 5 % and preferably from 0.1 to 3 % by weight relative to the weight of the hot melt adhesive composition. The stabilizers which are useful in the hot melt adhesive composition of the present invention are incorporated to help protect the polymers noted above, and thereby the total adhesive system from the effects of thermal and oxidative degradation which normally occurs during the manufacture and application of the adhesive, as well as in the ordinary exposure of the final product to the ambient environment.

Among the applicable stabilizers are high molecular weight hindered phenols and multifunction phenols, such as sulfur and phosphorous-containing phenols. Hindered phenols are well known to those skilled in the art and may be characterized as phenolic compounds that also contain sterically bulky radicals in close proximity to the phenolic hydroxyl group thereof. In particular, tertiary butyl groups generally are substituted onto the benzene ring in at least one of the ortho positions relative to the phenolic hydroxyl group. The presence of these sterically bulky substituted radicals in the vicinity of the hydroxyl group serves to retard its stretching frequency and correspondingly, its reactivity; this steric hindrance thus providing the phenolic compound with its stabilizing properties. Representative hindered phenols include: 1,3,5-trimethyl-2,4,6-tris(3-5-di-tert-butyl-4-hydroxybenzyl) benzene; pentaerythritol tetrakis-3(3,5-di-tert-butyl-4-hydroxyphenyl) propionate; n-octadecyl-3(3,5-di-tert-butyl-4-hydroxyphenyl) propionate, 4.4'-methylenebis(4-methyl-6-tert-butylphenol); 2,6-di-tertbutylphenol; 6-(4-hydroxyphenoxy)-2,4-bis(n-octylthio)-1,3,5-triazine; 2,3,6-tris(4-hydroxy-3,5-di-tert-butyl-phenoxy)-1,3,5-triazine;di-n-octadecyl-3,5-di-tert-butyl-4-hydroxybenzylphosphonate; 2-(n-octyl-thio)ethyl-3,5-di-tert-butyl-4-hydroxybenzoate and sorbitol hexa-3(3,5-di-tert-butyl-4-hydroxy-phenyl)propionate.

The performance of these stabilizers may be further enhanced by utilizing, in conjunction therewith, known synergists such as, for example, thiodipropionate esters and phosphites. Distearylthiodipropionate is particularly useful.

Such stabilizers are commercially available from BASF and include IRGANOX^{®} 565, 1010 and 1076 antioxidants which are hindered phenols. These are primary antioxidants which act as radical scavengers and may be used alone or in combination with other antioxidants such as phosphite antioxidants like IRGAFOS^{®} 168 antioxidant available from BASF. Many such stabilizers are available either to be used alone or in combination with other stabilizers. These compounds are typically added to the hot melts in small amounts and have no effect on other physical properties.

### Hot melt adhesive

In the hot melt adhesive composition, the weight ratio copolymer i) : terpolymer ii) is higher or equal to 2.5, more preferably ranges from 2.5 to 6, even more preferably from 2.8 to 5.

The viscosity at 170°C of the hot melt adhesive composition may range from 500 to 2500 mPa.s, preferably from 600 to 2000 mPa.s, even more preferably from 800 to 1700 mPa.s. The viscosity may be measured according to the ASTM D3236 standard and in a Brookfield RVT viscometer. If the viscosity of the hot melt adhesive composition is too low, it may cause dripping issue during application. If the viscosity is too high, it may cause stringing issue or could not be extruded through a common extrusion equipment (such as a spray gun). Therefore, it is preferable to control the viscosity of the hot melt adhesive composition in a specific range.

Preferably, the hot melt adhesive composition comprises, based on the total weight of the composition:
- from 10 to 60 wt%, preferably from 15 to 50 wt%, and more preferably from 25-40 wt% of the copolymer i);
- from 2 to 30 wt%, preferably from 2 to 20 wt%, and more preferably from 5 to 15 wt% of the ethylene-based terpolymer ii);
- from 20 to 70 wt%, preferably from 25 to 60 wt%, and more preferably from 30 to 50 wt% of the tackifier iii);
- from 1 to 50 wt%, preferably from 5 to 40 wt%, and more preferably from 10 to 30 wt% of the wax iv); and
- from 0 to 2 wt%, preferably from 0 to 1.5 wt%, and more preferably from 0 to 1 wt% of stabilizer.

The hot melt adhesive composition of the present invention may be formulated by using any of the mixing technique known in the art.

For example, the hot melt adhesive may be prepared by mixing the ingredients at a temperature ranging from 140°C to 160°C under air atmosphere in particular in a mixer consisting of a propeller powered by a motor, a heating mantle, a temperature control unit. The medium is preferably blended until a homogeneous blend is obtained.

Various methods of blending are known in the art and any method that produces a homogeneous blend is satisfactory. For example, a Cowles stirrer provides effective mixing for preparing these compositions.

The hot melt adhesive compositions according to the invention advantageously exhibits good adhesive properties for bonding substrates (preferably cellulosic substrates such as carton) at both low and high temperatures.

The hot melt adhesive composition of the invention advantageously exhibits good adhesive properties for bonding substrates (preferably cellulosic substrates such as carton) on a wide range of temperature (for example from -15°C to 60°C).

The hot melt adhesive composition as defined herein advantageously exhibits greater than or equal to 50% fiber tear at -5°C and greater than or equal to 80% fiber tear at 55°C.

The hot melt adhesive composition as defined herein advantageously exhibits greater than or equal to 70% fiber tear at -5°C and greater than or equal to 80% fiber tear at 55°C.

### B. Uses

The present invention concerns the use of the hot melt adhesive composition as defined above as an adhesive for bonding two substrates together, or as a coating on the surface of a substrate.

More particularly, the present invention relates to the use of a hot melt adhesive composition comprising:
- i) an ethylene vinyl acetate copolymer comprising a vinyl acetate content higher or equal to 20 % by weight;
- ii) an ethylene-based terpolymer comprising units derived from:
   ∘ ethylene;
   ∘ alkyl (meth)acrylate; and
   ∘ α,β-unsaturated carboxylic acid or anhydride thereof;
- iii) a tackifying resin, and
- iv) a wax,
for bonding substrates comprising at least one a cellulosic substrate.

The substrate to be bonded preferably include a cellulosic substrate.

The cellulosic substrate is preferably selected from the group consisting of carboard, paperboard, virgin kraft, recycled kraft, high and low density kraft and/or chipboard, and corrugated versions thereof, paper products, and mixtures thereof.

The present invention concerns the use of the hot melt adhesive composition in various industries, such as for packaging, converting, cigarette manufacture, bookbinding, bag ending and in nonwoven products.

The hot melt adhesive finds particular use as case, carton and tray forming adhesives, and as sealing adhesives. For example, in the packaging of beverages and drinks products, usually the adhesive is applied to the containers (e.g., cartons, corrugated cases, boxes, bags, trays and the like) and after packaging, the container is heat sealed. When used in packaging application, the hot melt adhesive composition of the present invention may present the following advantages: fast setting, excellent thermal stability, and good adhesion in a wide temperature range (e.g., from -20°C to 60°C), so it can be used either in winter or in summer.

Furthermore, this hot melt adhesive composition can advantageously maintain high bonding strength when the cases are loaded with heavy products (e.g., water, milk, beers) and subjected to high stresses and adverse environmental conditions during shipping and storage.

Hot melt adhesives for packaging are generally extruded in bead form or strip form onto a substrate using piston pump or gear pump extrusion equipment. Hot melt application equipment is available from several suppliers including Nordson, ITW and Slautterback. Wheel applicators are also commonly used for applying hot melt adhesives, but are used less frequently than extrusion equipment.

The present invention also relates to an article comprising a cellulosic substrate (more particularly as defined above) and a hot melt adhesive composition as defined above.

The article is more preferably a case, carton, tray or bag.

The ranges disclosed in this description include both the lower and the upper limit thereof. For example, the expressions "ranging from x to y" or "between x and y" comprises the limits x and y.

### EXPERIMENTAL PART

The following raw materials were used:

| **Raw material** | **Grade** | **Supplier** | **Properties** |
|---|---|---|---|
| EVA copolymer | UL8750 | ExxonMobile | MFR = 800 g/10min |
| | | | Vinyl acetate content = 28 wt% |
| EVA copolymer | UL53019 | ExxonMobile | MFR = 500 g/10min |
| | | | Vinyl acetate content = 19 wt% |
| Maleic anhydride-ethylene-methyl acrylate terpolymer | ET350X | Japan Polyethylene Corporation | MFR = 12 g/10min |
| | | | Methyl acrylate content = 23 wt% |
| | | | Maleic anhydride content = 2 wt% |
| | ET530H | Japan Polyethylene Corporation | MFR = 30 g/10min |
| | | | Methyl acrylate content = 16 wt% |
| | | | Maleic anhydride content = 3.8 wt% |
| Maleic anhydride-ethylene-vinyl acetate terpolymer | OREVAC^{®}T 9305 | SK Functional Polymer | MFR = 180 g/10min |
| | | | Vinyl acetate content = 28 wt% |
| | | | Maleic anhydride content = 0.6 wt% |
| Tackifier | HM-1000 | Henghe | Hydrogenated petroleum resin |
| Wax | FT wax H1 | SASOL | Fischer-Tropsch wax |
| Stabilizer | IRGANOX 1010 | BASF | |

### Method of measure of viscosity

The viscosity was measured according to ASTM D 3236 using a Brookfield viscometer with Spindle 21, at 170°C.

### Example 1 : preparation of the compositions

The adhesive compositions in Table 1 below are prepared by mixing all the ingredients at 160°C and reaching a homogeneous state by stirring.

**Table 1 : Adhesive compositions**

| | | | **Hot melt adhesives** | | | | | |
|---|---|---|---|---|---|---|---|---|
| **Raw materials** | | **EX1 (wt%)** | **EX2 (wt%)** | **EX3 (wt%)** | **EX4 (wt%)** | **CP1 (wt%)** | **CP2 (wt%)** | **CP3 (wt%)** |
| EVA copolymer i) | UL8750 | 30 | 30 | 30 | 25 | 40 | - | 30 |
| | UL53019 | - | - | - | - | - | 30 | - |
| Ethylene-based terpolymer ii) | ET350X | 8 | 10 | - | 15 | - | 10 | - |
| | ET530H | - | - | 8 | - | - | - | - |
| Maleic anhydride-ethylene-vinyl acetate terpolymer | OREVAC 9305 | - | - | - | 1 | - | - | 10 |
| Tackifier ii) | HM-1000 | 40.6 | 38.6 | 40.6 | 38.6 | 38.6 | 38.6 | 38.6 |
| Wax iv) | FT wax H1 | 21 | 21 | 21 | 21 | 21 | 21 | 21 |
| Antioxidant | IRGANOX 1010 | 0.4 | 0.4 | 0.4 | 0.4 | 0.4 | 0.4 | 0.4 |
| | | 100 | 100 | 100 | 100 | 100 | 100 | 100 |
| Property | Viscosity at 170°C (mPa.s) | 1250 | 1485 | 1075 | 2600 | 1050 | 1850 | 900 |
| Weight ratio EVA i) / terpolymer ii) | | 3.75 | 3.0 | 3.75 | 1.67 | - | - | - |

EX1, EX2, EX3 and Ex4 are hot melt adhesive compositions according to the invention, while CP1, CP2 and CP3 are comparative hot melt adhesive compositions.

EX4 is a hot melt adhesive comprising EVA copolymer i) and ethylene-based terpolymer ii) in a low weight ratio, i.e., 1.67. The composition of EX4 has a high viscosity which may make it difficult to be applied to a substrate by a normal spray gun, but it can be applied by other suitable adhesive application tools.

CP1 is a comparative hot melt adhesive comprising an ethylene vinyl acetate copolymer but deprived of ethylene-based terpolymer ii).

CP2 is a comparative hot melt adhesive comprising an ethylene vinyl acetate copolymer comprising a vinyl acetate content lower than 20 wt% (18wt%).

CP3 is a comparative hot melt adhesive comprising a maleic anhydride ethylene vinyl acetate copolymer (Orevac 9305), but does not comprise ethylene-based terpolymer ii).

### Example 2: performances

### Fiber tear test method:

The percentage fiber tear is the percentage of fiber that covers the area of the adhesive after two substrates, which have been previously bonded together through the adhesive, are separated by force. The percentage of fiber tear exhibited by an adhesive composition is determined as follows.

A two 3-4mm wide bead and 3-4cm long of adhesive (compositions C1 to C4) was applied at 170°C with a hand gun to a 2"X3" piece of cardboard, and was immediately attach another cardboard (same nature) to form a bond. A 500 grams weight was immediately place on the top of the bonding cardboard for 3 seconds to provide compression. The resulting constructions are then conditioned at the specified test temperature for 24 hours. The substrates of the construction were then separated from one another at the conditioning temperature (e.g., immediately after removing the sample from the conditioning chamber) by pulling the two substrates apart from one another by hand. The surface of the adhesive composition is observed and the percent of the surface area of the adhesive composition that is covered by fibers is determined and recorded. The results are reported in units of % fiber tear according to the following range:

| **% of fiber tear** | **Level** |
|---|---|
| 80-100 % | 5 |
| 51-79% | 4 |
| 31-50% | 3 |
| 1-30% | 2 |
| 0% | 1 |

The higher the percentage of fiber tear is, the better. Indeed, when the adhesive strength is high and adhesive anchors well to the substrate, the substrate will tear (fiber tear), if tried to open.

### Substrates:

Substrate A is a corrugated board having a high density kraft surface. Weight: 160 g/m²; Cobb value: 15g/m².

Substrate B is a corrugated board having a medium density kraft surface. Weight: 140 g/m²; Cobb value: 25g/m².

The first test was carried out at 5°C on a substrate A (based on the fiber test method described above). The results are provided in the following table:

| **Hot melt adhesives** | **EX1** | **EX2** | **EX3** | **EX4** | **CP1** | **CP2** | **CP3** |
|---|---|---|---|---|---|---|---|
| Fiber tear value (at 5°C) | 5 | 5 | 3 | 5 | 1 | 1 | 1 |

The compositions EX1-EX3 according to the invention advantageously exhibits a high fiber tear rate at low temperature (5°C) compared to comparative compositions CP1-CP3.

### Example 3 : tests at different temperatures

A similar fiber test as in example 2, was carried out on Substrate A and Substrate B at different temperatures: -20°C, -5°C, 5°C, 25°C, 55°C. The results are provided in the following table:

| | | **EX1** | **CP1** |
|---|---|---|---|
| **Substrate** | **Temperature** | Fiber tear | Fiber tear |
| Substrate A | -20°C | 3 | 1 |
| | -5°C | 4 | 1 |
| | 5°C | 5 | 2 |
| | 25°C | 5 | 5 |
| | 55°C | 5 | 5 |
| Substrate B | -20°C | 5 | 1 |
| | -5°C | 5 | 2 |
| | 5°C | 5 | 3 |
| | 25°C | 5 | 5 |
| | 55°C | 5 | 5 |

The composition EX1 according to the invention advantageously exhibits a high fiber tear rate at low temperatures (-20°C, -5°C and even 5°C) compared to comparative composition CP1 (EVA-based composition). Besides composition EX1 of the invention advantageously exhibits high fiber tear on a wide range of temperature from -20°C to 55°C.

Thus, the composition EX1 advantageously exhibits good cold resistance than traditional EVA-based hot melt (comparative composition CP1), and also good performances on a wide service range (from -20°C to 55°C) for bonding substrates.

## Claims

1. A hot melt adhesive composition comprising:
- i) an ethylene vinyl acetate copolymer comprising a vinyl acetate content higher or equal to 20 % by weight;
- ii) an ethylene-based terpolymer comprising units derived from:
∘ ethylene;
∘ alkyl (meth)acrylate; and
∘ α,β-unsaturated carboxylic acid or anhydride thereof;
- iii) a tackifying resin, and
- iv) a wax.

2. A hot melt adhesive composition according to claim 1, wherein the ethylene vinyl acetate copolymer i) comprises a vinyl acetate content of at least 22% by weight, preferably at least 25% by weight (based on the total weight of said ethylene vinyl acetate copolymer i).

3. A hot melt adhesive composition according to anyone of claim 1 or 2, **characterized in that** it comprises from 5% to 80% by weight, preferably from 10% to 60% by weight, more preferably from 15% to 50% by weight, and even more preferably from 25% to 40% by weight of ethylene vinyl acetate copolymer(s) i) based on the total weight of the hot melt adhesive composition.

4. A hot melt adhesive composition according to anyone of claims 1 to 3, wherein the alkyl (meth)acrylate of the ethylene-based terpolymer ii) is selected from the group consisting of methyl (meth)acrylate, ethyl (meth)acrylate, n-butyl (meth)acrylate, isobutyl (meth)acrylate, isopropyl (meth)acrylate, and mixtures thereof.

5. A hot melt adhesive composition according to anyone of claims 1 to 4, wherein the ethylene-based terpolymer ii) comprises an alkyl (meth)acrylate content ranging from 15 to 35 % by weight, preferably from 18 to 30 % by weight based on the total weight of the ethylene-based terpolymer ii).

6. A hot melt adhesive composition according to anyone of claims 1 to 5, wherein the terpolymer ii) has a melt index lower than or equal to 100 g/10 minutes, preferably in the range of from 5 g/10 minutes to 75 g/10 minutes, more preferably in the range of from 5 g/10 minutes to 70 g/10 minutes, and even more preferably ranging from 5 g/10 minutes to 30 g/10 minutes.

7. A hot melt adhesive composition according to anyone of claims 1 to 6, wherein the ethylene-based terpolymer ii) is selected from the group consisting of maleic anhydride-ethylene-methylacrylate terpolymer, maleic anhydride-ethylene-ethylacrylate terpolymer, maleic anhydride-ethylene-nbutylacrylate terpolymer, maleic anhydride-ethylene-isopropylacrylate terpolymer, maleic anhydride-ethylene-isobutylacrylate terpolymer, maleic anhydride-ethylene-isobutylmethacrylate terpolymer, and mixtures thereof.

8. A hot melt adhesive composition according to anyone of claims 1 to 7, wherein the ethylene-based terpolymer ii) is maleic anhydride-ethylene-methyl acrylate terpolymer.

9. A hot melt adhesive composition according to anyone of claims 1 to 8, **characterized in that** it comprises from 1% to 50% by weight of terpolymer(s) ii), preferably from 2% to 30% by weight, more preferably from 2% to 20% by weight, and even more preferably from 5% by weight to 15% by weight of terpolymer(s) ii) based on the total weight of the hot melt adhesive composition.

10. A hot melt adhesive composition according to anyone of claims 1 to 9, **characterized in that** it comprises from 20 to 70 % by weight, preferably from 25 to 60 % by weight, and even more preferably from 30 % to 50% by weight of tackifying resin iii) relative to the total weight of the hot melt adhesive composition.

11. A hot melt adhesive composition according to anyone of claims 1 to 10, wherein the tackifying resin iii) is selected from the group consisting of:
(a') Aliphatic and cycloaliphatic petroleum hydrocarbon resins and the hydrogenated derivatives thereof;
(b') Aromatic petroleum hydrocarbon resins and the hydrogenated derivatives thereof;
(c') Aromatic modified aliphatic or cycloaliphatic petroleum hydrocarbon resins and the hydrogenated derivatives thereof; and
(i') mixtures thereof.

12. A hot melt adhesive composition according to anyone of claims 1 to 11, wherein the tackifying resin iii) is selected from the hydrogenated resins.

13. A hot melt adhesive composition according to anyone of claims 1 to 12, wherein, the weight ratio copolymer i) : terpolymer ii) is higher or equal to 2.5, preferably ranges from 2.5 to 6, more preferably from 2.8 to 5.

14. A hot melt adhesive composition according to anyone of claims 1 to 13, **characterized in that** it comprises:
- from 10 to 60 wt%, preferably from 15 to 50 wt%, and more preferably from 25 to 40 wt% of the copolymer i);
- from 2 to 30 wt%, preferably from 2 to 20 wt%, and more preferably from 5 to 15 wt% of the ethylene-based terpolymer ii);
- from 20 to 70 wt%, preferably from 25 to 60 wt%, and more preferably from 30 to 50 wt% of the tackifier iii);
- from 1 to 50 wt%, preferably from 5 to 40 wt%, and more preferably from 10 to 30 wt% of the wax iv); and
- from 0 to 2 wt%, preferably from 0 to 1.5 wt%, and more preferably from 0 to 1 wt% of stabilizer.

15. A hot melt adhesive composition according to anyone of claims 1 to 14, **characterized in that** it has a viscosity ranging from 500 to 2500 mPa.s, preferably from 600 to 2000 mPa.s, and even more preferably from 800 to 1700 mPa.s, measured according to the ASTM D3236 standard and in a Brookfield RVT viscometer at 170°C.

16. Article comprising a cellulosic substrate and a hot melt adhesive composition as defined in anyone of claims 1 to 15.

17. Article according to claim 16, wherein the cellulosic substrate is selected from the group consisting of carboard, paperboard, virgin kraft, recycled kraft, high and low density kraft and/or chipboard, and corrugated versions thereof, paper products, and mixtures thereof.

18. Article according to anyone of claim 16 to 17, **characterized in that** it is a case, carton, tray or bag.

19. Use of the hot melt adhesive composition as defined in anyone of claims 1 to 15 for bonding substrates comprising at least one a cellulosic substrate.
